# EUROPÄISCHE PATENTSCHRIFT

(11) **EP 2 353 050 B1**
(45) Veröffentlichungstag und Bekanntmachung des Hinweises auf die Patenterteilung: **17.08.2016**
(21) Anmeldenummer: 09801382.4
(22) Anmeldetag: 12.11.2009
(51) Int. Cl.: G03H 1/02, G03H 1/04, G03H 1/22, G03H 1/26, G03H 1/20

(54) **Verfahren und Vorrichtung zum Herstellen von Volumen-Transmissions- und Reflexionshologrammen**
Method and apparatus for the production of volume transmission and reflection holograms
Procédé et dispositif de production d'hologrammes volumiques en transmission et en réflexion

(30) Priorität: 17.11.2008 DE 102008057784
(43) Veröffentlichungstag der Anmeldung: 10.08.2011
(73) Patentinhaber: Hologram Industries Research GmbH, 85652 Pliening-Ottersberg (DE)
(72) Erfinder: DAUSMANN, Günther, 85630 Grasbrunn (DE)
(74) Vertreter: Farago, Peter Andreas
(86) Internationale Anmeldenummer: PCT/DE2009/001589
(87) Internationale Veröffentlichungsnummer: WO 2010/054636

(56) Entgegenhaltungen:
- EP-A2- 1 515 199
- WO-A1-96/19754
- JP-A- 2 235 085
- JP-A- 7 104 650
- US-A- 6 055 075
- US-B1- 6 747 768

## Beschreibung

Die Erfindung betrifft ein Verfahren und eine Vorrichtung zum Herstellen von Volumen-Transmissions- und/oder Reflexionshologrammen gemäß dem Oberbegriff des Anspruchs 1 bzw. des Anspruchs 9.

Aus der DE 198 09 502 B4 und der DE 198 09 503 A1 ist jeweils ein Verfahren und eine Vorrichtung zur Herstellung einer Kontaktkopie von einem Reflexionshologramm bekannt. Das Hologramm wird durch das Befestigen eines Master- Hologramms auf ein Flachbett und das Andrücken des holografischen Films auf das Master-Hologramm mit anschließendem Belichten hergestellt. Um lokale Spannungen in dem Film zu vermeiden, muss nach dem Andrücken des Films auf das Master-Hologramm eine bestimmte Wartezeit eingehalten werden. Um eine schnelle Serienproduktion von hohen Stückzahlen zu erreichen, werden Pufferzonen vorgesehen, in welchen der Film die erforderliche Wartezeit von etwa 4 bis 5 Sekunden verbleibt, bevor das Hologramm als Ganzes belichtet wird, um das Master-Hologramm in einer Photopolymerschicht des Films zu reproduzieren.

Ähnliche Vorrichtungen und Verfahren sind auch zur Herstellung von Reflexions-Hologrammen bekannt, die insbesondere in Sicherheitselementen in großen Mengen benötigt werden. Zur Herstellung eines Reflexions-Hologramms wird ein transparentes Master-Hologramm auf einen reflektierenden Photopolymerfilm bzw. einen Photopolymerfilm mit einer reflektierenden Trägerschicht aufgelegt, um eine Kontaktkopie von dem Master-Hologramm herzustellen.

In der EP 0 726 142 B1 ist ein System zur kontinuierlichen Laminierung und Entlaminierung von Folien beschrieben bei dem ein photosensitiver Film über eine mit Masterhologrammen bestückte Trommel geführt und laserbelichtet wird. Dabei wird der aus einer fotoempfindlichen Schicht und beidseitig mit Basisfolien versehene Film über Rollen zugeführt, wobei die unterseitige Basisfolie abgezogen und der Film über eine Andrückrolle auf die Trommel auflaminiert wird, so dass die Fotoschicht klebend auf der Trommel und dem darauf befindlichen Master-Hologramm aufliegt. Nach erfolgter Laserbelichtung zur Herstellung der Hologrammkopie, sowie davor und danach vorgenommener UV-Belichtung für Maskentrimmen und Erleichterung der Ablaminierung, wird der Film von der Trommel abgezogen, mit einer Schutzfolie versehen, UV-gebacken und abtransportiert. Durch diese Vorrichtung können, unter Verwendung von auf die Trommel aufgebrachter Reflexions-Masterhologramme, nur Reflektionshologramme dupliziert werden. Das Erzeugen von Transmissionshologrammen oder gar ein gleichzeitiges oder bedarfsweise separates/einzelnes Erzeugen sowohl von Transmissions- als auch von Reflektionshologrammen unter Verwendung der gleichen Basis-Vorrichtung, der gleichen Trommel, ist weder vorgesehen, noch möglich.

Aus den JP 05249877 A, JP 2235085 A und JP 03148687 A sind ebenfalls Verfahren und Vorrichtungen zum Kopieren/Duplizieren von Hologrammen bekannt, bei denen auf einer rotierenden Trommel Reflexions-Masterhologramme befestigt sind, während ein photosensitiver Film kontinuierlich über die auf der Trommel fixierten Masterhologramme gelegt sich mit diesen mitbewegend geführt und belichtet wird. Auch mit diesen Einrichtungen können nur Reflektionshologramme (keine Transmissionshologramme) kopiert werden.

Schließlich ist aus der WO 96/19754 A1 ein Verfahren und eine Vorrichtung zum Herstellen von Transmissionshologrammen bekannt, die ebenfalls für eine kontinuierliche Massenherstellung geeignet ist. Dabei ist eine durchsichtige (Glas-) Trommel vorgesehen, auf der ein Master-Transmissionshologramm angeordnet ist, über das wiederum ein photoempfindlicher Film mitlaufend kontinuierlich geführt ist. Die Belichtung erfolgt aus dem Inneren der Trommel (axial eingebracht und radial umgelenkt) wobei Index-Match-Flüssigkeit zur Verhinderung unerwünschter Reflektionen zwischen Film und Master sowie Glaszylinder eingebracht wird und zwar einerseits durch Aufsprühen auf die Trommel und andererseits durch Eintauchen der Trommel in ein Badsystem. Auch mit dieser bekannten Vorrichtung können nur Transmissionshologramme kopiert werden, keine Reflektionshologramme, geschweige denn eine Kombination dieser Hologramme. Zudem ist, insbesondere wegen der notwendigen UV-Aushärtung, eine Quarzglastrommel mit hoher optischer Qualität zu verwenden, die im Falle großflächiger Hologramme in Größen bereitzustellen ist, die extrem teuer ist, wodurch eine wirtschaftliche Herstellung solcher Transmissionshologramme nicht möglich ist.

Der Erfindung liegt somit die Aufgabe zugrunde, ein Verfahren und eine Vorrichtung oben genannte Gattung zum Herstellen eines Volumen-Transmissions- und/oder Volumen-Reflexionshologramms bereitzustellen, das weniger aufwendig als herkömmliche Verfahren bzw. Vorrichtungen ist und zudem flexibel sowohl für Reflexions-Hologramme als auch für Transmissions-Hologramme einsetzbar ist.

Die Aufgabe wird durch ein Verfahren mit den Merkmalen des Anspruchs 1 und durch eine Vorrichtung mit den Merkmale des Anspruchs 9 gelöst; vorteilhafte Ausgestaltungen und Weiterbildungen der Erfindung ergeben sich aus den jeweilig rückbezogenen Unteransprüchen.

Wie zumindest teilweise vorbekannt, wird ein photosensitiver Film, bestehend aus einer Trägerfolie, einer Photopolymerschicht und einer Schutzfolie über eine zylindrische konvexe Trommelfläche geführt und auf der Trommeloberfläche mit einem Master-Hologramm in Kontakt gebracht. Dabei wird das Master-Hologramm simultan und insbesondere schlupffrei zusammen mit dem Film bewegt. Der Film und das Master-Hologramm werden zusammen in einen Belichtungsbereich bewegt, während beide auf der Trommeloberfläche aufgespannt sind. In dem Belichtungsbereich werden der Film und das Master-Hologramm mit einem linienförmig aufgeweiteten Belichtungslaser bestrahlt, um das Master-Hologramm in der Photopolymerschicht zu reproduzieren. Durch das Aufspannen des Films und über eine gemeinsame Teilstrecke auch des Master-Hologramms auf der Trommeloberfläche kann durch die konvexe Wölbung der Trommeloberfläche in einer besonders einfachen Weise eine gleichmäßige Auflagekraft zwischen dem Film und dem Master-Hologramm erzeugt werden, und lokale Spannungen können vermieden werden. Durch das Belichten des Hologramms in der Bewegung durch einen linienförmig aufgeweiteten Belichtungslaser kann ein kontinuierlicher Prozess ermöglicht werden, durch welchen auch sehr lange Bahnen von Filmen und/oder sehr lange Master-Hologramme in einer einfachen Weise belichtet werden können.

Erfindungswesentlich ist, dass mit der (gleichen) Trommel in der Photopolymerschicht des über diese geführten Films sowohl Reflexions- als auch Transmissions-Volumenhologramme gleichzeitig erzeugt werden, wobei hierfür zwei Master-Hologramme der Trommel gleichzeitig zugeordnet sind und mit dieser und dem auf der Trommel aufliegenden Film synchron mitbewegt werden. Dabei befindet sich ein erstes Master-Hologramm radial außerhalb des Films, während das zweite Master-Hologramm radial innerhalb des Films auf der Trommel aufgebracht ist.

Der Film besitzt zudem in bekannter Weise einen Schutzfilm (siehe auch die EP 1.515 199 A2), der von der Photopolymerschicht abgezogen wird, bevor die Photopolymerschicht des Films mit dem Master-Hologramm in Kontakt gebracht wird. Dadurch können Störungen in der Abbildung vermieden werden, die in herkömmlichen Verfahren durch den zwischen dem Master-Hologramm und dem Photopolymer angeordneten Schutzfilm entstehen können. Nach dem Belichten der Photopolymerschicht wird das Master-Hologramm von dem Film getrennt und der vorhergehend abgezogene oder ein neuer Schutzfilm wird wieder auf die Photopolymerschicht aufgebracht. Ein Umsetzen von verschiedenen Rollen des Schutzfilms kann jedoch erfindungsgemäß vermieden werden, wenn der zuvor abgezogene Schutzfilm über einen Umlenkmechanismus zu dem Film zurückgeführt wird und nach dem Belichten der Photopolymerschicht wieder auf diese auflaminiert wird.

Reflexionen an einer Kontaktfläche zwischen der Photopolymerschicht und dem Master-Hologramm können vermieden werden (siehe hierzu auch die JP 02235085 A), wenn ein dünner Flüssigkeitsfilm aus einer Index-Match-Flüssigkeit in einen Kontaktbereich zwischen der Photopolymerschicht und dem Master-Hologramm eingebracht wird oder vorhanden ist. Dies wird dadurch erreicht, dass die Photopolymerschicht an der Trommel außen und dann direkt in Berührungskontakt mit dem Master-Hologramm gelangt und so durch den Belichtungsbereich geführt wird. Bei Polymerschichten ist dies jedoch nicht notwendig, da diese selbst wie Index-Match wirken, wenn die Schutzfolie abgezogen wird.

Ferner wird vorgeschlagen, dass das (transparente) Transmissions-Master-Hologramm für die Transmissionsreplikation (Transmissionsherstellung) eine geschlossene Endlosschleife bildet, die in einer radial außerhalb der Trommeloberfläche angeordneten (Film-) Führungseinrichtung geführt wird. Das Master-Hologramm kann dann praktisch endlos auf dem Film mit der Photopolymerschicht synchron abgerollt werden. Es befindet sich somit radial außerhalb des Films. Dabei können die Führungseinrichtung und/oder das Transmissions-Masterhologramm bedarfsweise abnehmbar angeordnet sein, so daß sowohl Reflexions- als auch Transmissions-Volumenhologramme auch einzeln erzeugbar sind.

Ein Umlenken des Belichtungslasers innerhalb der von dem Master-Hologramm gebildeten Schleife kann vermieden werden, wenn der Belichtungslaser in einem (oberen) Einstrahlungsbereich durch das Master-Hologramm hindurch in einen Innenraum der Schleife eingeleitet wird und aus dem Innenraum der Schleife in den Belichtungsbereich gestrahlt wird. Der Belichtungslaser bestrahlt daher das Master-Hologramm zweimal, und zwar im oberen Einstrahlungsbereich und im Belichtungsbereich an der Trommel, bevor er auf den Photopolymerfilm bzw. eine reflektierende Schicht des auf der Trommel aufliegenden Films trifft.

Zur Herstellung von Volumen-Reflexionshologrammen ist das (zweite) Master-Hologramm auf der Trommeloberfläche befestigt, so dass der Film von radial außen auf dem Master-Hologramm aufliegt.

Nach einer Weiterbildung der Erfindung wird vorgeschlagen, dass die Trommeloberfläche die Oberfläche eines Glaszylinders ist, in welchen der linienförmig aufgeweitete Belichtungslaserstrahl in einem ersten Bereich der Trommeloberfläche eingestrahlt wird, so dass der Belichtungslaserstrahl in dem Belichtungsbereich von radial innen aus dem Glaszylinder austritt. Durch die Möglichkeit der Belichtung von der radialen Innenseite aus können Reflexions-Hologramme mit Hilfe eines auf die Trommeloberfläche montierten Transmissions-Master-Hologramms hergestellt werden.

Reflexionen oder Brechungen an den Grenzbereichen des Glaszylinders können vermieden werden, wenn der Glaszylinder in diesen Bereichen in eine Index-Match-Flüssigkeit eingetaucht ist. Dies ist bei Polymeren nicht notwendig, wie vorbeschrieben, da diese wie Index-Match wirken.

Die zur Durchführung des vorbeschriebenen Verfahrens dienende erfindungsgemäße Vorrichtung umfasst insbesondere eine Trommeloberfläche zum Führen des Films und zum Kontaktieren des Films mit dem Master-Hologramm, eine erste und eine zweite (mindestens eine) Kontaktierungsrolle (Führungs- und/oder Spannrolle) zum Kontaktieren des Master-Hologramms mit dem Film, eine Laserlichtquelle und eine Zylinderoptik zum linienförmigen (Längs-) Aufweiten der Laserlichtquelle, sowie einen Antriebsmechanismus zum simultanen Bewegen des Master-Hologramms und des Films. Der Antriebsmechanismus bewegt den Film simultan und schlupffrei zusammen mit dem Master-Hologramm durch einen Belichtungsbereich der Vorrichtung, in welchem der Film und das Master-Hologramm mit dem linienförmig aufgeweiteten Belichtungslaserstrahl bestrahlt werden, um das Master-Hologramm in der Photopolymerschicht zu reproduzieren. Wesentlich ist zudem, dass zwei Master- Hologramme der Trommel gleichzeitig zugeordnet sind und synchron mitbewegt werden, wobei das eine Master-Hologramm sich radial oberhalb des Films aufliegend befindet, während das zweite Master-Hologramm radial unterhalb des Films auf der Trommel befestigt vorgesehen ist.

In besonders vorteilhaften Ausgestaltungen der Erfindung umfasst die Vorrichtung ferner eine (Film-) Führungseinrichtung zum Führen des radial außen zum Film befindlichen und zu einer Schleife geschlossenen Master-Hologramms in einem Endlos-Umlauf und/oder einen Umlenkmechanismus zum Zurückführen und Auflaminieren eines abgezogenen Schutzfilms auf die Photopolymerschicht.
In einer besonders vorteilhaften Ausgestaltung der Erfindung ist die Führungseinrichtung der Master-Schleife als zusammenhängende Baugruppe bzw. unabhängiges Modul von der Trommeloberfläche lösbar, so dass ein Umbau der Vorrichtung zwischen verschiedenen Konfigurationen, die zur Herstellung von TransmissionsHologrammen oder zur Herstellung von Reflexions-Hologrammen geeignet sind, einfach möglich ist. Hierfür kann aber auch nur die Master-Schleife aus der Führungseinrichtung entnehmbar bzw. entfernbar vorgesehen sein.

Im Einstrahlbereich beeinflusst das Master-Hologramm den Belichtungslaserstrahl nur dann, wenn der Winkel zwischen dem Belichtungslaserstrahl und dem Master-Hologramm in einem eng begrenzten Bereich liegt, in welchem sich konstruktive Interferenzen zwischen gebeugten Anteilen des Laserstrahls und der durchgehenden Nullten Ordnung ausbilden können. Durch eine geeignete Einstellung dieses Winkels, die insbesondere über einen Einstellmechanismus der Führungseinrichtung erfolgen kann, können solche Interferenzen sicher vermieden werden.

Volumen-Hologramme werden in der Praxis mit meist leicht divergenten Referenzwellen belichtet und bestrahlt. Um diese Divergenz zu kompensieren, kann ein Einfallwinkel des Belichtungslaserstrahls im Belichtungsbereich abhängig von der Position der zu belichtenden Zeile variiert werden. Dazu kann in den Strahlengang des Belichtungslaserstrahlsein verstellbarer Spiegel eingebracht werden, der abhängig von der Position des Master-Hologramms beispielsweise mit einem Linearmotor bewegt werden kann.

Ferner kann die erfindungsgemäße Vorrichtung einen Glaszylinder der oben beschriebenen Art umfassen, der entweder als Hohlzylinder oder als Zylinder aus Vollmaterial ausgebildet sein kann und zur Vermeidung von Reflexionen an der Oberfläche an kritischen Stellen in ein Bad aus Index-Match-Flüssigkeit eingetaucht ist. Der Glaszylinder kann ferner Mittel zum Montieren eines Transmissions-Master-Hologramms umfassen.

Nachfolgend wird die Erfindung anhand mehrerer Ausführungsbeispiele unter Bezug auf die Zeichnung näher erläutert.

Es zeigen:
- Fig. 1:: schematisch eine Vorrichtung in erster Ausführung, zur Herstellung von Volumen-Transmissionshologrammen,
- Fig. 2:: schematisch eine Vorrichtung in zweiter Ausführung, zur Herstellung von Volumen-Reflexionshologrammen ,
- Fig. 3:: schematisch eine Vorrichtung in dritter Ausführung, zur Herstellung von Volumen-Transmissions- und/oder Reflexionshologrammen, und
- Fig. 4:: schematisch eine Vorrichtung in vierter Ausführung, zur Herstellung von Transmissionshologrammen mit einer Glastrommel.

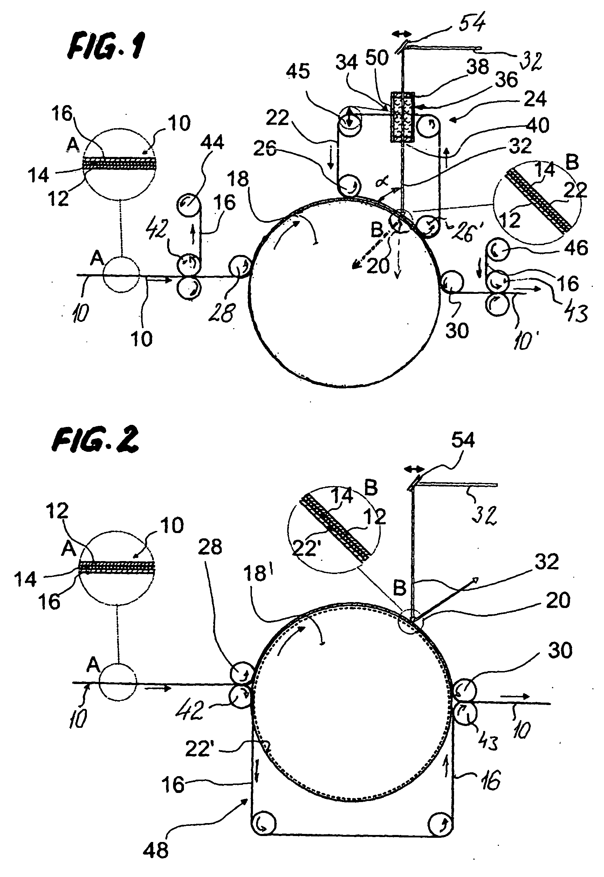

Flg. 1 zeigt eine Vorrichtung zur automatisierten Ausführung eines Verfahrens zum Herstellen einer Kontaktkopie eines Master-Hologramms auf einem holographischen Film (Transmissionshologramm), insbesondere auf einem Film 10 mit einer Trägerfolie 12 und einer holographischen Schicht, die insbesondere eine Photopolymerschicht 14 sein kann. Ferner besitzt der Film in seinem Rohzustand einen Schutzfilm 16, der auf die Photopolymerschicht 14 auflaminiert ist.
Die Vorrichtung weist eine Trommel 18 auf, über welche der Film 10 (ohne Schutzfilm 16) geführt wird und die den Film 10 in einer Rollbewegung durch einen auf der Oberfläche der Trommel 18 liegenden Belichtungsbereich 20 durch transportiert.
Eine Schnittdarstellung des Films 10 in einem Bereich A ist zudem in Fig. 1 vergrößert dargestellt, aus der die Schichtung des Films genau erkennbar ist.

Ein zu einer Endlosschleife geschlossenes transparentes Master-Hologramm 22 ist in einer radial außerhalb der Trommel 18 angeordneten (Film-) Führungseinrichtung 24 geführt, die mehrere Führungs- und/oder Spannrollen 26 umfaßt. Dabei rollt das Master-Hologramm 22 auf dem Film 10 aufliegend ab, der seinerseits fest auf der Oberfläche der Trommel 18 aufliegt und bewegt sich gleichzeitig und schlupffrei zusammen mit dem Film 10 in dem Belichtungsbereich 20. In dem Belichtungsbereich 20 ist damit der Film 10 zwischen dem Master-Hologramm 22 und der Oberfläche der Trommel 18 angeordnet. Die Führungseinrichtung 24 erzeugt durch die Führungs- und/oder Spannrollen 26 eine Zugspannung in dem Master-Hologramm 22, die sich durch die zylindrische Form (Konvexität) der Oberfläche der Trommel18 in eine Auflagekraft des Master-Hologramms auf den Film 10 überträgt. Weitere Führungs- und Spannrollen 28, 30 erzeugen nach dem gleichen Prinzip eine Auflagekraft des Films 10 auf der Trommel 18, vor und nach dem Kontaktbereich mit der Führungseinrichtung 24 des Master-Hologramms 22. Durch die Haftreibung oder durch andere geeignete Maßnahmen fördert dabei die Trommel 18 den Film 10 schlupffrei und auch das Master-Hologramm 22 wird schlupffrei zusammen mit dem Film 10 (auf diesem fest aufliegend) bewegt. Die Trommel 18 und/oder die Führungseinrichtung 24 werden von einem hier nicht dargestellten Elektromotor kontinuierlich angetrieben.

Der Belichtungslaserstrahl 32 ist durch eine Zylinderoptik linienförmig aufgeweitet (in Achsrichtung der Trommel) und beleuchtet das transparente Master-Hologramm 22 und den Film 10 somit in einer axial zu der Trommel 18 verlaufenden Linie. Der Belichtungslaserstrahl 32 hat einen Winkel von ca. 45° zu einer Tangente an der (oder Diagonalen der) Trommel 18 in dem Belichtungsbereich 20.

Der Belichtungslaserstrahl 32 nimmt beim Durchlaufen des transparenten Master- Hologramms 22 die darin gespeicherten Informationen auf und eine nullte Brechungsordnung des Belichtungslaserstrahls 32 interferiert in der Photopolymerschicht 14 des Films 10 mit der ersten Brechungsordnung des Belichtungslaserstrahls 32. Dadurch wird die Photopolymerschicht 14 mit den in dem Master-Hologramm 22 gespeicherten Informationen beschrieben. Es entsteht eine Kontaktkopie des Master-Hologramms 22, wobei je nach der Art des holographischen Films noch weitere Entwicklungs- und/oder Härtungsschritte erfolgen müssen. Die Trägerfolie 12 des Films 10 ist transparent und die Oberfläche der Trommel 18 ist vorzugsweise schwarz, so dass das Licht des Belichtungslaserstrahls 32 nach dem Durchlaufen des Films 10 absorbiert wird.

Der Belichtungslaserstrahl 32 durchläuft das Master-Hologramm 22 nicht nur in dem Belichtungsbereich 20 unmittelbar auf der Oberfläche der Trommel 18, sondern auch in einem vertikal oberhalb des Belichtungsbereiches 20 angeordneten Einstrahlungsbereichs 34, in welchem der Belichtungslaserstrahl 32 durch das transparente Master-Hologramm 22 hindurch in einen Innenraum der Master-Schleife und damit der Führungseinrichtung 24 geleitet wird. Der Belichtungslaserstrahl 32 wird anschließend aus dem Innenraum heraus in den Belichtungsbereich 20 geleitet. Eine Umlenk-Optik innerhalb der Schleife kann dadurch entfallen. In dem Einstrahlungsbereich 34 ist eine Küvette 36 zum reflexionsfreien Durchleiten des Belichtungslaserstrahls 32 angeordnet.

Eine obere Führungs-Rolle 45 der Führungseinrichtung 24 ist verstellbar vorgesehen, z. B. vertikal beweglich. Durch das Verstellen der Rolle 45 kann der Winkel verändert werden, mit dem der Belichtungslaserstrahl 32 im Einstrahlungsbereich 34 auf das Master-Hologramm 22 trifft. Dieser Winkel kann so gewählt werden, dass der Belichtungslaserstrahl das Master-Hologramm 22 in der Küvette 36 durchläuft, ohne gestört zu werden.

Die Küvette 36 besitzt einen Deckel 38 und einen Boden 40 aus reflexionsfreien Gläsern und ist vollständig mit einer Index-Match-Flüssigkeit 50 gefüllt. Das Master-Hologramm 22 wird durch jeweils mit Spaltdichtungen abgedichtete Spalte (nicht näher dargestellt) seitlich in die Küvette 36 hinein und aus der Küvette 36 wieder hinaus geführt. Die Spaltdichtungen sind dabei so ausgelegt, dass das Master-Hologramm 22 beim Austritt aus der Küvette 36 nicht vollständig trocken ist, sondern auf einer Seite (äußere) mit einem dünnen Film aus der Index-Match-Flüssigkeit belegt ist (nicht bei Photopolymer notwendig). Wenn das Master-Hologramm 22 durch die erste untere Führungs- und/oder Spannrolle 26 der Führungseinrichtung 24 auf den Film 10 aufgebracht wird, befindet sich somit ein dünner Flüssigkeitsfilm zwischen dem Master-Hologramm 22 und dem Film, der eine unerwünschte Reflexion des Belichtungslaserstrahls 32 an der Grenzfläche zwischen dem Master-Hologramm 22 und dem Film 10 vermeidet. Die Führungs- und/oder Spannrolle 26 erzeugt dabei einen zur Trommel 18 radialen Anpressdruck, der hinreichend ist, um eine Blasenfreiheit dieser (feuchten) Kontaktpartie zu garantieren.

Wenn am Eingang der Vorrichtung der Film 10 auf die Trommel 18 geführt wird, wird vorhergehend an einer Abzieh-Führungsrolle 42 der Schutzfilm 16 von dem Film 10 abgezogen. Ein negativer Einfluß auf die Qualität der Kontaktkopie kann dadurch vermieden werden. Das Abziehen des Schutzfilms 16 kann alternativ auch erst an der Führungs- und/oder Spannrolle 28 erfolgen (siehe Fig. 2). Der Schutzfilm 16 wird auf eine Rolle 44 aufgerollt und kann wiederverwertet werden. Am Ausgang der Vorrichtung wird dann von einer Rolle 46 mit dem Schutzfilm 16 der vorhergehend abgezogene oder ein neuer Schutzfilm 16 abgerollt und über eine Auflaminierrolle 43 (wieder) auf den Film 10 auflaminiert, der den Belichtungsbereich 20 durchlaufen hat, um die Photopolymerschicht 14 erneut zu schützen. Der Film 10 wird nämlich so über die Trommel 18 geführt, dass die Photopolymerschicht 14 radial außen liegt und so unmittelbar in Kontakt mit dem Master-Hologramm 22 kommt.
In einer alternativen Konfiguration kann der Film 10 umgekehrt orientiert sein, so dass die Photopolymerschicht 14 radial innenseitig auf der Trommel 18 aufliegt. Die letztgenannte Konfiguration ist insbesondere, aber nicht ausschließlich, bei der nachfolgend beschriebenen Herstellung von Transmissions-Hologrammen sinnvoll.

Im Strahlengang des Belichtungslaserstrahls 32 ist ein Umlenkspiegel 54 angeordnet, der über einen oder mehrer Linearmotoren (nicht dargestellt) verstellbar ist. Während des Belichtens kann die Position dieses Umlenkspiegels abhängig von der Vorschubposition des Master-Hologramms 22 im Filmführungsmechanismus 24 verändert werden. Durch das Verstellen des Umlenkspiegels 54 wird der Einfallswinkel des Belichtungslaserstrahls 32 im Belichtungsbereich 20 verändert. Dadurch kann einer divergenten Referenzwelle Rechnung getragen werden, so dass eine durch die divergente Referenzwelle bedingte Bildverzerrung beim Betrachten des Volumenhologramms kompensiert werden kann und die Bragg'schen Bedingungen für die Rekonstruktion erfüllt sind.

In Fig. 2 ist eine Ausführungsform der Vorrichtung dargestellt, die veranschaulicht, wie zur Herstellung von Reflexions-Hologrammen die Filmführungseinrichtung 24, der eine separate Baugruppe bildet, einfach entnommen worden ist. Alternativ kann die Führungseinrichtung an der Vorrichtung belassen und nur das Master-Holgramm 22 aus dieser entnommen werden (nicht dargestellt). Statt dessen wird auf einer Trommeloberfläche der Trommel 18 ein anderes (das zweite) Master-Hologramm 22' montiert, so dass von einer Master-Trommel gesprochen werden kann. Das Master-Hologramm 22' kann nun auf gebogene Platten auflaminiert sein, die ihrerseits mit der Trommel 18 verschraubt werden.
Die Master-Trommel18 kann in besonders vorteilhafter Weise aber auch als magnetische oder mit magnetischen Elementen ausgerüstete Trommel ausgebildet sein, auf welcher ein flexibles Master-Hologramm 22' mit zumindest teilweise magnetischen flexiblen Flächen sehr einfach aufspann- und auswechselbar anbringbar ist. Der Film 10 wird im Belichtungsbereich 20 durch Interferenzen zwischen unmittelbar einfallenden Anteilen des Belichtungslaserstrahls 32 und Anteilen dieses Belichtungslaserstrahls 32 belichtet, die von dem Master-Hologramm 22 reflektiert werden und erneut durch den Film hindurchtreten.

Der Schutzfilm 16 wird hier erst knapp vor dem (Ein-) Führen des Films 10 über die Trommel 18 von dem (im Vergleich mit Fig. 1 seitenverkehrt eingelegten) Film 10 abgezogen und mit Hilfe eines Umlenkmechanismus 48 wieder zu dem austretenden Film 10 zurückgeführt und auf diesen auflaminiert, nachdem der Film 10 den Belichtungsbereich 20 durchlaufen hat. Während in dem Ausführungsbeispiel gemäß Fig. 1 ein Umsetzen der Rollen 44, 46 erfolgt, wenn die (Aufwickel-)Rolle 44 voll bzw. die (Abwickel-) Rolle 46 leer ist (oder eine ganz neue volle Rolle eingesetzt wird), entfällt dieser Arbeitsschritt in dem Ausführungsbeispiel gemäß Fig. 2, so dass ein kontinuierlicher Betrieb ermöglicht wird.

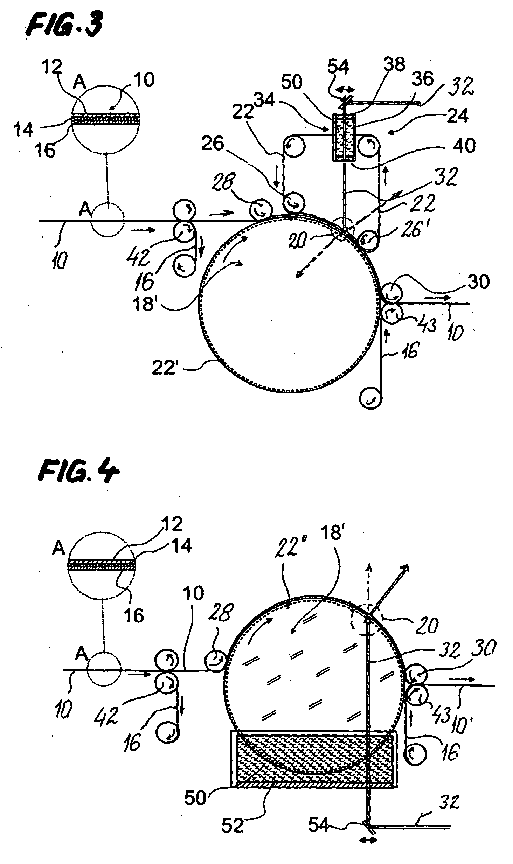

**Flg.** 3 zeigt ein Ausführungsbeispiel der erfindungsgemäßen Vorrichtung, in welcher der Film 10 nicht in einem Winkelbereich von ca. 180° über die Trommel18 geführt wird wie in Fig. 1 und 2, sondern in einem geringeren Winkel- oder Umfangsbereich. Zudem wird auch hier der Film seitenverkehrt eingeführt, so dass die Photopolymerschicht 14 direkt auf der Master-Trommel aufliegt, wie beim Ausführungsbeispiel aus Fig. 2. Zudem ist zu erkennen, dass diese Vorrichtung im Wesentlichen eine Kombination der in Fig. 1 und 2 aufgezeigten Vorrichtungen darstellt und somit ebenfalls in Kombination leistet oder leisten kann, was diese vorbeschriebenen Vorrichtungen leisten.
In allen Ausführungsformen der Erfindung können also prinzipiell ein transparentes Master-Hologramm 22 auf der Filmfördereinrichtung 24 und ein reflektierendes Master-Hologramm 22' auf der Master-Trommel 18 gleichzeitig verwendet werden, um ein Hologramm herzustellen, das sowohl als Transmissions-Volumenhologramm als auch als Reflexions-Volumenhologramm funktioniert.

Diese Vorrichtung ist erfindungsgemäß somit in unterschiedlichen Betriebsmodi verwendbar bzw. ausgelegt und zwar einerseits zum Herstellen eines Volumen- Transmissions-Hologramms und andererseits auch zum Herstellen eines Volumen- Reflexions-Hologramms in einem kontinuierlichen Prozeß und kann für beide Arten von Hologrammen gleichzeitig oder bedarfsweise einzeln verwendet werden. Dies ist in Abhängigkeit davon zu sehen, ob die Führungseinrichtung 24 mit dem Master-Hologramm 22 und/oder mit dem Master-Hologramm 22' vorhanden bzw. aktiviert sind.

Fig. 4 schließlich zeigt ein weiteres Ausführungsbeispiel der Vorrichtung, in welchem die Master-Trommel18 als Glaszylinder ausgebildet ist. Der Glaszylinder kann aus Vollmaterial oder hohl ausgestaltet sein. Der zu einer Linie aufgeweitete Belichtungslaserstrahl 32 wird von unten in die Trommel 18 bzw. den Glaszylinder eingestrahlt. Um Reflexionen an der Oberfläche des Glaszylinders zu vermeiden, ist dieser in ein Bad aus Index-Match-Flüssigkeit 50 eingetaucht, dessen Boden 52 von einem reflexionsfreien Glas gebildet ist. Der Belichtungslaserstrahl 32 durchdringt daher den Boden 52, die Index-Match-Flüssigkeit 50 und den Glaszylinder ohne Reflexion an den entsprechenden Oberflächen und trifft in dem Belichtungsbereich 20 von der Innenseite des Glaszylinders aus auf das transparente Master-Hologramm 22", das auf der Oberfläche der Glas-Trommel 18 montiert ist. Der auch hier seitenverkehrt, also mit der Photopolymerschicht 14 nach unten weisend, eingelegte Film 10 kann eine Reflexionsschicht besitzen, so dass die in dem Master-Hologramm 22" gespeicherten Informationen in dem Film 10 als Reflexions-Hologramm gespeichert werden können. Dargestellt ist hier jedoch eine reflexlose Ausführung, so dass ein Transmissionshologramm erzeugbar ist. Nicht dargestellt ist, dass, falls die Trommel 18 hohl ist, zur Vermeidung von Reflexionen beim Austritt aus der Glaswand der Trommel 18 in den Innenraum der Trommel 18 eine weitere Küvette mit Index-Match-Flüssigkeit und einem Deckel aus reflexionsfreiem Glas angeordnet sein kann, um Reflexionen des Belichtungslaserstrahls 32 zu vermeiden.

### Bezugszeichenliste

- 10.: Film, holographischer
- 12.: Trägerfolie
- 14.: Photopolymerschicht (holographische Schicht)
- 16.: Schutzfilm
- 18.: Trommel
- 18'.: Master-Trommel
- 20.: Belichtungsbereich
- 22.: Erstes, transparentes Master-Hologramm
- 22'.: Zweites, reflektierendes Master-Hologramm
- 22".: Zweites, transparentes Master-Hologramm
- 24.: (Film-)Führungseinrichtung
- 26.: Spannrolle {Führungs- Rolle)
- 28.: Spannrolle (Führungs- Rolle)
- 30.: Spannrolle (Führungs- Rolle)
- 32.: Belichtungslaserstrahl
- 34.: Einstrahlungsbereich
- 36.: Küvette
- 38.: Deckel
- 40.: Boden
- 42.: Führungsrolle (Abzieh-Rolle)
- 43.: Führungsrolle (Auflaminier-Rolle), für Schutzfolie
- 44.: Rolle (Führungs-Rolle), Aufrollen
- 45.: Rolle (Führungs-Rolle), verstellbare, obere
- 46.: Rolle (Führungs-Rolle), Abrollen
- 48: Umlenkmechanismus
- 50.: Index-Match-Flüssigkeit
- 52.: Boden
- 54.: Umlenkspiegel
- α =: Einfallswinkel

## Patentansprüche

1. Verfahren zum Herstellen von Volumen-Transmissions- und Reflexionshologrammen auf einem photosensitivem Film (10), der eine Trägerfolie (12), eine holographische Schicht (14) und einen Schutzfilm (16) besitzt,
bei dem der Film (10) über eine Trommel (18) geführt, auf der Trommel (18) mit einem Master-Hologramm (22) in Kontakt gebracht wird und zusammen mit dem Master-Hologramm durch einen Belichtungsbereich (20) bewegt wird, in welchem der Film (10) und das Master-Hologramm mit einem linienförmig aufgeweiteten Belichtungslaserstrahl (32) bestrahlt werden, um das Master-Hologramm in der Photopolymerschicht (14) zu reproduzieren,
**dadurch gekennzeichnet,**
**dass** unter Verwendung nur einer Trommel (18) in der Photopolymerschicht (14) des über diese geführten Films (10) sowohl Reflexions- als auch Transmissions- Volumenhologramme gleichzeitig erzeugt werden, wofür zwei Master-Hologramme (22 und 22') zumindest in dem Belichtungsbereich (20) der Trommel (18) gleichzeitig zugeordnet sind und auf und mit dieser und mit dem auf der Trommel (18) aufliegenden Film (10) synchron mitbewegt werden,
wobei sich das erste Master-Hologramm (22) radial außerhalb des Films (10) befindet, während das zweite Master-Hologramm (22') radial innerhalb des Films (10) auf der Trommel (18) aufgebracht ist.

2. Verfahren nach Anspruch 1, **dadurch gekennzeichnet,**
**dass** das erste Master-Hologramm ein transparentes Master-Transmissionshologramm (22) ist und eine geschlossene Master-Schleife bildet, die in einer radial außerhalb der Trommel (18) angeordneten Film-Führungseinrichtung (24) geführt wird oder Teil dieser Einrichtung ist und dabei auf dem Film (10) aufliegend abrollt.

3. Verfahren nach Anspruch 2, **dadurch gekennzeichnet,**
**dass** der Belichtungslaserstrahl (32) in einem Einstrahlungsbereich (34) durch einen äußeren Abschnitt der Master-Schleife des Master-Hologramms (22) hindurch in einen Innenraum der Schleife eingeleitet wird und aus dem Innenraum der Master-Schleife in den Belichtungsbereich (20) gestrahlt wird.

4. Verfahren nach Anspruch 3, **dadurch gekennzeichnet,**
**dass** in dem oberen Einstrahlungsbereich (34) eine mit einer Index-Match- Flüssigkeit gefüllte Küvette (36) angeordnete ist, so dass der Belichtungsiaserstrahi (32) durch das Master-Hologramm (22) in den Innenraum der Master-Schleife reflexionsfrei durchgeleitet wird,
und **dass** ein Film oder dünne Schicht aus einer Index-Match-Flüssigkeit in einen Kontaktbereich zwischen der holographischen Schicht (14) und dem Master-Hologramm (22) eingebracht wird.

5. Verfahren nach Anspruch 3, **dadurch gekennzeichnet,**
**dass** der Winkel, mit dem der Belichtungslaserstrahl (32) im äußeren Einstrahlungsbereich (34) auf das Master-Hologramm (22) trifft, durch eine verstellbare obere Führungsrolle (45) und/oder Neigen der Küvette (36) so veränderbar ist, dass der Belichtungsstrahl (32) das Maser-Hologramm (22) in der Küvette (36) durchläuft, ohne gestört zu werden,
und **dass** während der Belichtung eine divergente Referenzwelle durch eine verschiebbaren Umlenkspiegel (54) herstellbar ist und/oder durch Vibrieren des Laserstrahls.

6. Verfahren nach Anspruch 1, **dadurch gekennzeichnet,**
**dass** die Master-Trommel (18) einen Glaszylinder besitzt, in welchen der linienförmig aufgeweitete Belichtungslaserstrahl (32) in einem ersten Bereich der Trommel (18) eingestrahlt wird, so dass der Belichtungslaserstrahl (32) in dem Belichtungsbereich (20) von radial innen aus dem Glaszylinder der Trommel (18) austritt, ein Transmissionsholgramm erzeugend, wobei der Glaszylinder der Master-Trommel (18) in dem ersten Eintrittsbereich in eine Index-Match-Flüssigkeit (50) eingetaucht ist.

7. Verfahren nach Anspruch 1, **dadurch gekennzeichnet,**
**dass** ein erster Einfallswinkel des Belichtungslaserstrahls (32) auf den Film (10) abhängig von einer Position des Master-Hologramms (22) verändert wird.

8. Verfahren nach Anspruch 1, **dadurch gekennzeichnet,**
**dass** vor und nach dem Kontaktbereich des Films (10) mit der Trommel (18) der Film über je eine Führungs- und Spannrolle (28 und 30) geführt ist und jeweils am Eingang vorhergehend und am Ausgang danach über eine Abziehrolle (42) und eine Auflaminierrolle (43) der Schutzfilm (16) vom Film (10) abgezogen und auf diesen wieder auflaminiert wird, wobei der eingangs abgezogene Schutzfilm (16) über einen Umlenkmechanismus zu dem nunmehr belichteten Film (10) zurückgeführt wird und somit nach dem Belichten der holographischen Schicht (14) wieder auf diesen auflaminiert wird.

9. Vorrichtung zum Durchführen des Verfahrens nach den Ansprüchen 1 bis 8, mit einer Trommel (18) zum Führen eines photosensitiven Films (10) und zum Kontaktieren des Films (10) mit einem Master-Hologramm, einer ersten Führungs- und/oder Spannrolle (26, 28) zum Kontaktieren des Master-Hologramms mit dem auf der Trommel auf liegenden Film, einem linienförmig aufgeweiteten Belichtungslaserstrahl (32) und einem Antriebsmechanismus zum simultanen gemeinsamen Bewegen des Master- Hologramms und des Films durch einen Belichtungsbereich (20), in welchem der Film (10) und das Master-Hologramm mit dem linienförmig aufgeweiteten Belichtungslaserstrahl (32) bestrahlt werden, um das Master-Hologramm in der Polymerschicht (14) zu reproduzieren,
**dadurch gekennzeichnet,**
**dass** zwei Master-Hologramme (22 und 22') der Trommel (18) und dem auf dieser geführten Film (10) gleichzeitig zugeordnet sind und zwar ein erstes transparentes Transmissions-Master- Hologramm (22) radial außerhalb des Films (10) und ein zweites Reflexions- oder Transmissions-Master-Hologramm (22') radial unterhalb des Films (10) auf der Master-Trommel (18') und wobei die beiden Master-Hologramme (22, 22') gleichzeitig vorgesehen sind.

10. Vorrichtung nach Anspruch 9, **dadurch gekennzeichnet,**
**dass** eine radial außerhalb der Trommel (18) angeordnete Filmführungseinrichtung (24) zum Führen des zu einer Master-Schleife geschlossenen ersten Master- Hologramms (22) vorgesehen ist,
und **dass** de Führungseinrichtung (24) und/oder das Transmissions-Master-Hologramm (22) bedarfsweise abnehmbar an der Vorrichtung angeordnet sind.

11. Vorrichtung nach Anspruch 10, **dadurch gekennzeichnet,**
**dass** die obere äußere Spann- und Führungsrolle (45) des Führungsmechanismus (24) höhenverstellbar vorgesehen ist, zur Winkel-Verstellung des ersten Einstrahlungsbereiches (34) des Belichtungslaserstrahles (32),
und **dass** während der Belichtung eine divergente Referenzwelle durch einen verstell- oder verschiebbaren Umlenkspiegel (54) herstellbar ist.

12. Vorrichtung nach Anspruch 9, **dadurch gekennzeichnet,**
**dass** das andere, zweite Master-Hologramm (22') auf der Master-Trommel (18') befestigt ist und dass der Film (10) von radial außen auf dem Master- Hologramm (22') aufliegt.

13. Vorrichtung nach Anspruch 12, **dadurch gekennzeichnet,**
**dass** die Master-Trommel (18') als magnetische oder mit magnetischen Elementen ausgerüstete Trommel ausgebildet ist, auf welcher ein flexibler Master (22') mit zumindest teilweise magnetischen flexiblen Flächen auf die Trommel (18) aufspann- und auswechselbar anbringbar ist.

14. Vorrichtung nach Anspruch 12, **dadurch gekennzeichnet,**
**dass** die Master-Trommel (18') einen Glaszylinder besitzt, in welchen der linienförmig aufgeweitete Belichtungslaserstrahl (32) so in einem ersten Bereich der Trommel (18) einstrahlend vorgesehen ist, dass er in dem Belichtungsbereich (20) von radial innen aus dem Glaszylinder der Master-Trommel austritt,
und **dass** der Glaszylinder der Master-Trommel (18') zumindest in dem ersten Bereich in ein Bad aus Index-Match-Flüssigkeit (50) eingetaucht ist, dessen Boden (52) aus reflexionsfreiem Glas besteht.

15. Vorrichtung nach Anspruch 9, **dadurch gekennzeichnet,**
**dass** vor und nach dem Kontaktbereich des Films (10) mit der Trommel (18) der Film über je eine Führungs- und Spannrolle (28 und 30) geführt ist und jeweils am Eingang vorhergehend und am Ausgang danach über eine Abziehrolle (42) und eine Auflaminierrolle (43) der Schutzfilm (16) vom Film abgezogen und auf diesen wieder auflaminiert wird, wobei ein Umlenkmechanismus (48) vorgesehen ist, zum Zurückführen des vom Film (10) abgezogenen Schutzfilms (16) von der Abziehrolle (42) zur Auflaminier-Rolle (43) zum Auflaminieren des Schutzfilms (16) auf die Polymerschicht (14) des Films (10) nach dem Belichten.

## Claims

1. Method for producing volume transmission and reflection holograms on a photosensitive film (10) which has a backing foil (12), a holographic layer (14) and a protective foil (16), wherein the film (10) is is guided over a drum (18), contacted on the drum (18) with a master hologram (22) and moved through an exposure zone (20) together with the master hologram, where the film (10) and the master hologram are irradiated with a linearly expanded exposure laser beam (32) in order to reproduce the master hologram in the photopolymer layer (14), **characterized in that**
using only one drum (18), both reflection and transmission volume holograms are produced simultaneously in the photopolymer layer (14) of the film (10) guided over the drum, for which purpose two master holograms (22 and 22') are assigned simultaneously at least in the exposure zone (20) of the drum (18) and are moved on and together with the same and in synchrony with the film (10) lying on the drum (18),
wherein the first master hologram (22) is located radially outside the film (10) whereas the second master hologram (22') is attached to the drum (18) radially within the film (10).

2. Method according to Claim 1, **characterized in that** the first master hologram is a transparent master transmission hologram (22) and forms a closed master loop which is guided in a film guiding unit (24) located radially outside the drum (18), or which is part of this unit and during this process is unwound resting on the film (10).

3. Method according to Claim 2, **characterized in that** the exposure laser beam (32) is guided, in an irradiation area (34), through an outer portion of the master loop of the master hologram (22) into an interior of the loop and radiated from the interior of the master loop into the exposure zone (20).

4. Method according to Claim 3, **characterized in that** in the upper irradiation area (34), an optical cell (36) filled with an index match fluid is arranged so that the exposure laser beam (32) is guided in a reflectionless manner through the master hologram (22) into the interior of the master loop,
and **in that** a film or thin layer of an index match fluid is brought in a contact zone between the holographic layer (14) and the master hologram (22).

5. Method according to Claim 3, **characterized in that** the angle at which the exposure laser beam (32) is incident upon the master hologram (22) in the outer irradiation area (34) can be altered by means of an adjustable upper guide roller (45) and/or by inclination of the optical cell (36) such that the exposure beam (32) passes through the master hologram (22) in the optical cell (36) undisturbed,
and **in that** during exposure, a diverging reference wave can be produced by means of a slidable tilted mirror (54) and/or by vibration of the laser beam.

6. Method according to Claim 1, **characterized in that** the master drum (18) has a glass cylinder into which the linearly expanded exposure laser beam (32) is irradiated into a first region of the drum (18) so that the exposure laser beam (32) exits in the exposure zone (20) radially from the inside of the glass cylinder of the drum (18), creating a transmission hologram, with the glass cylinder of the master drum (18) being immersed in an index match fluid (50) in the first irradiation region.

7. Method according to Claim 1, **characterized in that** a first incidence angle of the exposure laser beam (32) on the film (10) is altered depending on a position of the master hologram (22).

8. Method according to Claim 1, **characterized in that** before and behind the contact area of the film (10) with the drum (18), the film is guided over one guide and tensioner pulley (28 and 30) each and, both at the input before and at the output behind, the protective film (16) is drawn off the film (10) by means of a pinch roll (42) and laminated back onto it by means of a lamination roll (43); the protective film (16), which has been drawn off, being guided back to the film (10), which has now been exposed, by means of a reversing mechanism, and thus after exposure of the holographic layer (14) being laminated back onto said film.

9. Device for performing the method according to Claims 1 through 8, having a drum (18) for guiding a photosensitive film (10) and for bringing the film (10) in contact with a master hologram, a first guide and/or tensioner pulley (26, 28) for bringing the master hologram in contact with the film resting on the drum, a linearly expanded exposure laser beam (32) and a drive mechanism for simultaneously moving the master hologram and the film together through an exposure zone (20) in which the film (10) and the master hologram are irradiated with the linearly expanding exposure laser beam (32) so as to reproduce the master hologram in the polymer layer (14),
**characterized in that**
two master holograms (22 and 22') are assigned to the drum (18) and to the film (10) guided on the same simultaneously, i. e. a first transparent transmission master hologram (22) radially outside the film (10) and a second reflection or transmission master hologram (22') radially below the film (10) on the master drum (18'), and wherein the two master holograms (22, 22') are provided simultaneously.

10. Device according to Claim 9, **characterized in that** a film guiding device (24) arranged radially outside the drum (18) is provided for guiding the first master hologram (22) closed to a master loop,
and **in that** the guiding device (24) and/or the transmission master hologram (22) are arranged on the device so that they can be removed, if desired.

11. Device according to Claim 10, **characterized in that** the upper outer guide and tensioner pulley (45) of the guiding mechanism (24) is adjustable in height, for angular adjustment of the first irradiation area (34) of the exposure laser beam (32),
and **in that** during exposure, a diverging reference wave can be created by means of an adjustable or slidable tilted mirror (54).

12. Device according to Claim 9, **characterized in that** the other, second master hologram (22') is fastened to the master drum (18') and **in that** the film (10) rests on the master hologram (22') radially on the outside.

13. Device according to Claim 12, **characterized in that** the master drum (18') is formed as a magnetic drum or a drum equipped with magnetic elements, to which drum (18) a flexible master (22') with at least partially magnetic flexible planes can be attached so as to be able to be tensioned and replaced.

14. Device according to Claim 12, **characterized in that** the master drum (18') has a glass cylinder in which the linearly expanded exposure laser beam (32) is provided irradiatingly in a first area of the drum (18), such that it exits in the exposure zone (20) the glass cylinder of the master drum from radially inside,
and **in that** the glass cylinder of the master drum (18') is immersed, at least in the first area, in a bath of index match liquid (50), the bottom (52) of which is made of reflectionless glass.

15. Device according to Claim 9, **characterized in that** before and behind the contact area of the film (10) with the drum (18), the film is guided over one guide and tensioner pulley (28 and 30) each and, both at the input before and at the output behind, the protective film (16) is drawn off the film by means of a pinch roll (42) and laminated back onto it by means of a lamination roll (43); wherein a reversing mechanism (48) is provided for guiding the protective film (16) drawn off the film (10) back from the pinch roll (42) to the lamination roll (43) for laminating the protective film (16) onto the polymer layer (14) of the film (10) after exposure.

## Revendications

1. Procédé de production d'hologrammes volumiques en transmission et en réflexion sur un film photosensible (10), qui possède un film support (12), une couche holographique (14) et un film protecteur (16),
dans lequel le film (10) est guidé par un tambour (18), amené sur le tambour (18) en contact avec un hologramme maître (22) et déplacé avec l'hologramme maître dans une zone d'exposition (20) dans laquelle le film (10) et l'hologramme maître sont irradiés par un rayon laser d'exposition (32) élargi en une forme linéaire pour reproduire l'hologramme maître dans la couche de photopolymère (14),
**caractérisé en ce que**,
en utilisant seulement un tambour (18) dans la couche de photopolymère (14) du film guidé sur celui-ci (10), aussi bien des hologrammes de réflexion que de transmission en volume sont générés, ce pour quoi deux hologrammes maîtres (22 et 22') sont associés au tambour (18) simultanément, du moins dans la zone d'exposition (20), et déplacés de manière synchrone avec celui-ci avec le film (10) reposant sur le tambour (18),
le premier hologramme maître (22) se trouvant radialement à l'extérieur du film (10), tandis que le second hologramme maître (22') est appliqué radialement à l'intérieur du film (10) sur le tambour (18).

2. Procédé selon la revendication 1, **caractérisé en ce que**
le premier hologramme maître est un hologramme maître de transmission transparent (22) et constitue une boucle maîtresse conduite fermée qui est guidée dans un dispositif de guidage de film (24) disposé radialement à l'extérieur du tambour (18) ou forme partie intégrante de ce dispositif et roule alors en reposant sur le film (10).

3. Procédé selon la revendication 2, **caractérisé en ce que**,
le rayon laser d'exposition (32) est conduit dans une zone d'exposition (34) dans une section extérieure de la boucle maîtresse de l'hologramme maître (22) dans un espace intérieur de la boucle et est irradié depuis l'espace intérieur de la boucle maîtresse dans la zone d'exposition (20).

4. Procédé selon la revendication 3, **caractérisé en ce que**, dans la zone d'irradiation supérieure (34), est disposée une cuvette (36) remplie d'un liquide d'adaptation d'indice, de sorte que le rayon laser d'exposition (32) est conduit à travers l'hologramme maître (22) dans l'espace intérieur de la boucle maîtresse sans réfléchissement,
et qu'un film ou une couche mince fait(e) d'un liquide d'adaptation d'indice est appliqué(e) dans une zone de contact entre la couche holographique (14) et l'hologramme maître (22).

5. Procédé selon la revendication 3, **caractérisé en ce que** l'angle suivant lequel le rayon laser d'exposition (32) arrive dans la zone d'irradiation extérieure (34) sur l'hologramme maître (22) est modifiable par un rouleau de guidage supérieur réglable (45) et/ou par inclinaison de la cuvette (36) de manière à ce que le rayon d'exposition (32) traverse l'hologramme maître (22) dans la cuvette (36) sans être gêné
et que, pendant l'exposition, une onde de référence divergente peut être générée par un miroir d'inversion déplaçable (54) et/ou par vibration du rayon laser.

6. Procédé selon la revendication 1, **caractérisé en ce que**
le tambour maître (18) comporte un cylindre en verre dans lequel le rayon laser d'exposition élargi en forme linéaire (32) est irradié dans une première zone du tambour (18), de sorte que le rayon laser d'exposition (32) sort du cylindre en verre du tambour (18) radialement de l'intérieur dans la zone d'exposition (20) en générant un hologramme de transmission, le cylindre de verre du tambour maître (18) étant, dans la première zone d'entrée, plongé dans un liquide d'adaptation d'indices (50).

7. Procédé selon la revendication 1, **caractérisé en ce qu'**un premier angle d'incidence du rayon laser d'exposition (32) sur le film (10) est modifié en fonction d'une position de l'hologramme maître (22).

8. Procédé selon la revendication 1, **caractérisé en ce que**,
en amont et en aval de la zone de contact du film (10) avec le tambour (18), le film est guidé chaque fois par un rouleau de guidage et de serrage (28 et 30) et que, respectivement en amont de l'entrée et ensuite à la sortie, le film protecteur (16) est retiré du film (10) et re-laminé sur celui-ci au moyen d'un rouleau d'extraction (42) et d'un rouleau de laminage (43), le film protecteur retiré à l'entrée (16) étant renvoyé par un mécanisme d'inversion vers le film désormais exposé (10) est ainsi re-laminé sur celui-ci après l'exposition de la couche holographique (14).

9. Dispositif de réalisation du procédé selon les revendications 1 à 8, comportant un tambour (18) pour guider un film photosensible (10) et pour mettre en contact le film (10) avec un hologramme maître, un premier rouleau de guidage et/ou de serrage (26, 28) pour mettre en contact l'hologramme maître avec le film reposant sur le tambour, un rayon laser d'exposition élargi en forme linéaire (32) et un mécanisme d'entraînement pour déplacer en commun simultanément l'hologramme maître et le film dans une zone d'exposition (20) dans laquelle le film (10) et l'hologramme maître sont irradiés avec le rayon laser d'exposition élargi en forme linéaire (32) afin de reproduire l'hologramme maître dans la couche de polymère (14),
**caractérisé en ce que**
deux hologrammes maîtres (22 et 22') sont associés simultanément au tambour (18) et au film guidé sur celui-ci (10), à savoir un premier hologramme maître de transmission transparent (22) radialement à l'extérieur du film (10) et un second hologramme maître de réflexion ou de transmission (22') radialement en dessous du film (10) sur le tambour maître (18'), les deux hologrammes maîtres (22, 22') étant prévus simultanément.

10. Dispositif selon la revendication 9, **caractérisé en ce qu'**un dispositif de guidage de film (24) disposé radialement à l'extérieur du tambour (18) est prévu pour guider le premier hologramme maître (22) fermé en une boucle maîtresse
et que le dispositif de guidage (24) et/ou l'hologramme maître de transmission (22) sont disposés en cas de besoin de manière amovible au niveau du dispositif.

11. Dispositif selon la revendication 10, **caractérisé en ce que** le rouleau extérieur supérieur de guidage et de serrage (45) du mécanisme de guidage (24) est prévu réglable en hauteur pour le réglage de l'angle de la première zone d'exposition (34) du rayon laser d'exposition (32)
et que, pendant l'exposition, une onde de référence divergente peut être générée par un miroir d'inversion réglable ou déplaçable (54).

12. Dispositif selon la revendication 9, **caractérisé en ce que** l'autre second hologramme maître (22') est fixé sur le tambour maître (18') et que le film (10) repose radialement depuis l'extérieur sur l'hologramme maître (22').

13. Dispositif selon la revendication 12, **caractérisé en ce que** le tambour maître (18') se présente sous forme d'un tambour magnétique ou équipé d'éléments magnétiques sur lequel un maître flexible (22') doté de surfaces flexibles du moins partiellement magnétiques (18) peut être monté et installé sur le tambour de manière échangeable.

14. Dispositif selon la revendication 12, **caractérisé en ce que** le tambour maître (18') possède un cylindre de verre dans lequel le rayon laser d'exposition élargi en forme linéaire (32) est prévu pour irradier dans une première zone du tambour (18) de manière à sortir dans la zone d'exposition (20) radialement de l'intérieur du cylindre en verre du tambour maître
et que le cylindre en verre du tambour maître (18') est plongé du moins dans la première zone dans un bain de liquide d'adaptation d'indice (50) dont le fond (52) est composé de verre non réfléchissant.

15. Dispositif selon la revendication 9, **caractérisé en ce que**, en amont et en aval de la zone de contact du film (10) avec le tambour (18), le film est chaque fois guidé par un rouleau de guidage et de serrage (28 et 30) et que, respectivement en amont de l'entrée et ensuite à la sortie, le film protecteur (16) est respectivement retiré du film au moyen d'un rouleau d'extraction (42) et d'un rouleau de laminage (43) et re-laminé sur celui-ci, un mécanisme d'inversion (48) étant prévu pour renvoyer le film protecteur (16) retiré du film (10) du rouleau extracteur (42) vers le rouleau de laminage (43) pour le laminage du film protecteur (16) sur la couche de polymère (14) du film (10) après exposition.
